Europäisches Patentamt

European Patent Office

Office européen des brevets

(19)

(11) Publication number: **0 111 207**

**A1**

(12) **EUROPEAN PATENT APPLICATION**

(21) Application number: **83111680.1**

(22) Date of filing: **23.11.83**

(51) Int. Cl.³: **F 16 B 31/02**

(30) Priority: **10.12.82 US 448431**

(43) Date of publication of application:
**20.06.84 Bulletin 84/25**

(84) Designated Contracting States:
**DE FR GB IT NL SE**

(71) Applicant: **Russell, Burdsall & Ward Corporation**
**8100 Tyler Blvd.**
**Mentor Ohio 44060(US)**

(72) Inventor: **Capuano, Terry D.**
**611 River Road**
**Hinckley Ohio 44233(US)**

(74) Representative: **Gille, Christian, Dipl.-Ing. et al,**
**Redies , Redies, Türk & Gille Bruckner Strasse 20**
**D-4000 Düsseldorf 13(DE)**

(54) **Load indicating fastener and tool for producing same.**

(57) A load indicating flanged fastener is disclosed in which the flange (11) is formed with a main bearing surface (13) extending along a radial plane and load indicating, axially extending projecting portions (16,17,18) are provided at peripherally spaced locations around the flange (11). Each load indicating portion (16,17,18) includes an inclined transition portion (22) extending forwardly from the bearing surface (13) and radial surfaces (21) at the periphery of the flange extending beyond the transition surfaces (22). When the fastener is tightened against a mating surface to a predetermined load, the load indicating portions (16,17,18) are deflected until the main bearing portion engages the mating surface. The hexagonal wrenching portion (10) of the fastener is sized and oriented so that it does not project materially beyond the line (23) of intersection between the bearing surfaces (13) and inclined surfaces (22), and therefore does not materially affect the stiffness of the flange (11). The flange (11) is formed by a die which can be economically produced by a relatively simple method of die shaping.

FIG.2

LOAD INDICATING FASTENER AND TOOL FOR PRODUCING SAME

## BACKGROUND OF THE INVENTION

This invention relates generally to threaded fasteners, and more particularly to a novel and improved load indicating flanged fastener, and to the tools operable to produce such a fastener.

## Prior Art

Load indicating flanged fasteners are well known. Such fasteners often include a flange or washer which is provided with a bearing surface and a plurality of spaced, projecting portions which extend axially beyond the bearing surface. When the fastener is first tightened, the projecting portions provide the initial engagement with the mating part. As the fastener is tightened, the flange is deflected until the bearing surface engages the mating part. Such engagement occurs when a predetermined load is applied to the fastener. The projections are sized and shaped so that the proper load is applied when the bearing surface bottoms out.

Examples of such fasteners are illustrated in U.S. patents Nos. 3,030,996; 4,293,256; and 4,296,248. Another example of such fastener is disclosed and claimed in pending U. S. patent application Serial No. 423,861, filed September 27, 1982. The second-last of the listed patents and the pending application are assigned to the assignee of this invention.

## SUMMARY OF THE INVENTION

In accordance with the present invention, a novel and improved load indicating fastener is provided which is relatively easy to produce and which reliably provides an accurate indication when the fastener is properly loaded.

This invention also provides a novel and improved die for producing such fasteners and an improved method of producing such die.

The fastener provides a recessed, planar bearing surface and at least three peripherally spaced, forwardly projecting portions, each providing a forwardly inclined transition portion forming a small angle with the bearing portion and a substantially radial, planar portion spaced forward of the bearing surface.

When the fastener is provided with a hexagonal projection, the flange is sized with respect to the hexagonal wrenching portion so that the wrenching portion does not project any substantial extent into the projecting portions of the flange. Therefore, the projecting portions of the flange are not materially stiffened by the hexagonal driving portion of the fastener.

Between the projecting portions of the flange, the bearing surface extends to the periphery of the flange so that a visual indication is available when the bearing surface engages the mating part. Such engagement provides an indication that the fastener is properly loaded.

A relatively low-cost, easily produced tool is provided for the formation of the flanged bearing surface and projections. Such tool includes a central planar portion of maximum extension. Peripherally spaced around the tool are at least three recessed portions produced by a formed cutter making lateral cuts across the face. In the illustrated embodiment, there are three recesses formed in the die, formed by three passes of a cutter with appropriate indexing between each cut. Because the flange-forming face of the die does not contain any interior surfaces which are recessed back from the bearing surface, the machining of the flange-producing face of the die is easily and economically accomplished.

These and other aspects of this invention are illustrated in the accompanying drawings and more fully described in the following specification.

## BRIEF DESCRIPTION OF THE DRAWINGS

FIG. 1 is a side elevation of a flanged bolt in accordance with the present invention, in which the portion of the shank of the bolt adjacent to the flange is eliminated to allow a full view of the flange;

FIG. 2 is a bottom view of the bolt of FIG. 1, illustrating the shape of the underside of the flange;

FIG. 3 is a cross section, taken along line 3-3 of FIG. 1;

FIG. 4 is a longitudinal section of a die operable to form the fastener of FIGS. 1 through 3;

FIG. 5 is an end view of the die illustrated in FIG. 4;

FIG. 6 is a longitudinal section of a die operable to form a flanged nut; and

FIG. 7 is a cross section of a nut produced on the die of FIG. 6, in which the load indicating flange has the same configuration as the bolt of FIGS. 1 through 3.

## DETAILED DESCRIPTION OF THE DRAWINGS

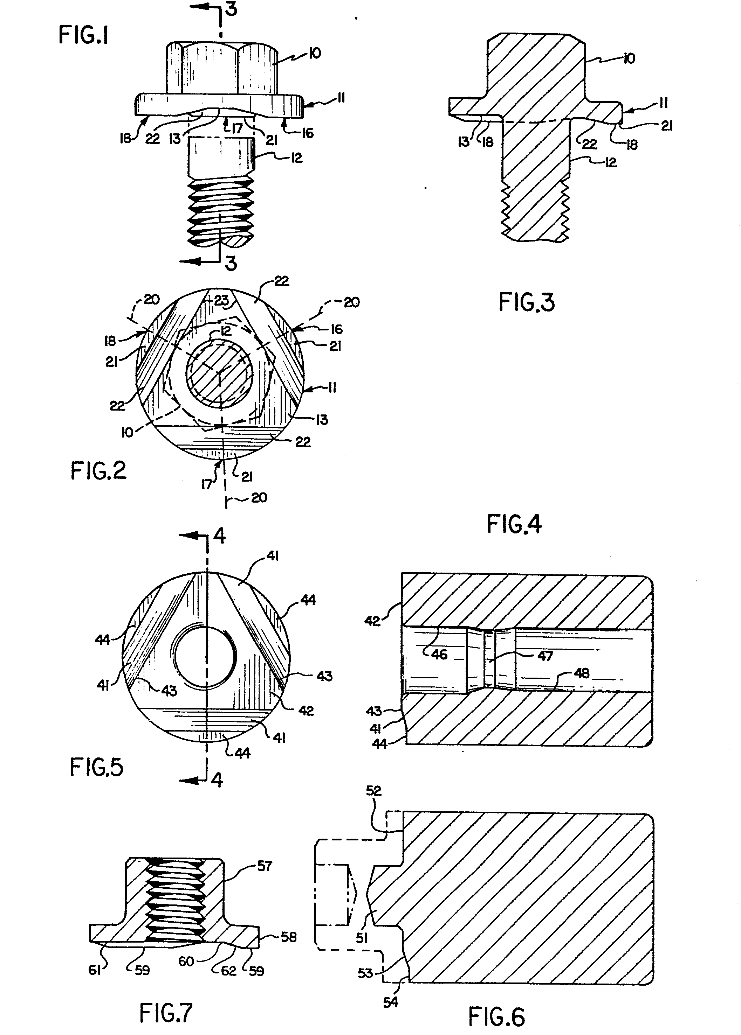

FIGS. 1 through 3 illustrate a bolt provided with a load indicating flange in accordance with the present invention. Such bolt includes a hexagonal head 10 sized to accept a wrench, a circular, radially extending load indicating flange 11, and a threaded shank 12. In FIG. 1, the shank 12 is illustrated broken away adjacent to the head so as to allow the illustration of the full periphery of the clamping surface provided by the flange 11.

The flange 11 provides a generally triangle-shaped bearing surface 13 and three forwardly projecting load indicating surface portions 16, 17, and 18 which are peripherally and symmetrically spaced around the flange 11. The three load indicating surface portions are identical in shape and include a forward surface 21 and an associated inclined transition surface 22 which joins the forward surfaces 21 and the main bearing surface 13. In the illustrated embodiment, the transition surface is a planar surface which extends back from the forward surfaces at an angle of about 16 degrees. Further in the illustrated embodiment, the forward surfaces 21 are radial and are contained in a single forward plane spaced forward from the plane containing the bearing surface 13. The load indicating portions are formed so that they are each bisected by a radius 20.

When the bolt is installed and tightened against a mating surface, the mating part which is clamped by the head of the bolt is engaged first by the forward surfaces 16 and the main bearing surface 13 of the bolt is spaced from the surface of the mating part by a distance equal to the displacement between the forward surfaces 21 and the main bearing surface 13. As the bolt is tightened, the flange 11 is deflected until sufficient deflection has occurred to move the forward surfaces 21 back into the plane of the main bearing surface 13. When this occurs, substantially the entire area of the flange engages the mating part and the bolt is properly tightened.

The load indicating surface portions 16, 17, and 18 are equally spaced around the periphery and are sized so that the main load bearing surface 13 extends to the periphery of the flange between each of the load indicating surface portions. Consequently, when the bolt is tightened against the mating surface, a gap is initially provided at each of three locations around the periphery of the flange. Such gaps remain until the bolt is fully seated, at which time the load indicating surface portions of the flange have been deflected to allow contact between the bearing surface 13 and the mating part. As soon as the installer sees that the gaps are no longer present, he knows that the proper load has been applied to the bolt.

Preferably, the head should be sized so that it does not project beyond the boundary lines 23 of the bearing surface 13 where it intersects with the transition sections 22, so that the presence of the head does not affect the stiffness of the projecting portions. However, as best illustrated in FIG. 2, the hexagonal wrenching portion 10 of the bolt head can project a small amount beyond the boundary lines 23 between the main load bearing surface 13 and the three transition sections 22 without materially affecting the stiffness of the load indicating portions or the force required to fully seat the flange.

Preferably, the flange 11 is sized somewhat larger than is conventional for a given size of flange bolt, and the wrenching portion 10 is sized the next size smaller than would be conventional for a typical flange bolt so as to ensure that the wrenching portion does not materially affect the stiffness of the flange, and therefore does not affect the ultimate load indicating function of the flange. The wrenching portion of a bolt need not, in most instances, be arranged so that the flats are in alignment with the section lines 23, particularly when the head size is reduced from the size normally provided. When such orientation is not required, it is not necessary to provide a specific orientation of the tooling used to forge the bolt. However, in some instances it may be desirable to orient the tooling that is to produce the bolt so that the intersection lines 23 are parallel to the adjacent flats of the wrenching portion. When a particular orientation of the bolt head flats is not required, the upper side of the flanges should be either radial or a somewhat conical surface of revolution, so that the lack of specific orientation of the tooling does not affect the final flange thickness.

It is within the broader aspects of this invention to produce a transition surface 22 which is not, strictly speaking, planar; however, for reasons stated below, it is important that the bearing surface 13 be located so that no part of the workpiece gripping surface of the flange is recessed back from the bearing surface 13.

Further, it is desirable to produce the forward bearing surfaces 21 so that they are substantially radial and provide sufficient area to prevent any significant digging in of such surfaces on the mating workpiece as the bolt is tightened.

FIGS. 4 and 5 illustrate the die for producing the bolt illustrated in FIGS. 1 through 3. Such die is easily manufactured by merely facing the end of the die to provide a smooth radial surface and thereafter cutting away recessed portions at at least three locations around the periphery of the die. Such cuts remove material and produce a transition surface 41 intersecting the radial end face 42 at an intersection located at about 43. The

0111207

radial recessed portion 44 extends along the outer edge of the transition portion 41. As illustrated in FIG. 5, the three transition portions 41 are located in a symmetrical arrangement around the peripihery of the die to provide three transition portions 41 and three recessed radial portions 44. After each cut, the die is indexed through 120 degrees in the case of a three-cut die and the cut is repeated. Usually, the cut can be formed by a milling cutter formed with a profile arranged to produce the required transition surfaces or portions 41 and radial surfaces or portions 44. Because the surface 42 is at the full extremity of the die, these simple cutting operations can be used to produce the die of required shape, and it is not necessary to perform any difficult machining operations to produce any of the end surfaces of the die.

In FIG. 4, the die is also formed with a central bore 46, an extrusion throat 47, and a relieved bore 48 extending beyond the extrusion throat. Such shape is typically used in the manufacture of bolts or the like. In practice, the partially formed bolt blank is provided with a partially formed head and a partially formed shank. Complementary tooling is then used to press the shank portion of the blank into the bore 46 and through the extrusion throat 47 until the head portion engages the end face of the die to produce the desired shape on the underside of the flange 11.

FIG. 6 illustrates a die operable to form a flanged nut, and FIG. 7 illustrates the nut completed from a blank formed with the die of FIG. 6. The end face of the die 6 is formed with corresponding surfaces to the die of FIG. 4 in the same manner described above, and differs materially from the die of FIGS. 4 and 5 only in that a projection 51 is centrally located on the end face of the die. The radial surface 52 is formed by a simple turning operation around the projection 51 and subsequently the three recessed portions are cut, preferably with a milling cutter, to produce transition portions 53 and recessed, radially extending portions 54.

The nut 57 of FIG. 7 is again formed with a flange 58 providing three symmetrically arranged load indicating projections 59 which are joined to the main bearing surface 61 by transition portions 62. Here again, the various portions are arranged so that the main bearing surface 61 extends to the periphery of the flange between each of the axially extending load indicating portions.

In producing nuts in accordance with this invention, it is preferable to orient the tooling so that the flats on the nut are parallel to and do not extend beyond the intersection 60 between the transition portions 62 and the bearing surface 61. With such orientation, the maximum wall thickness can be provided in the nut without affecting the resilience of the load indicating projections 59.

In most instances, it is preferable to provide three symmetrically arranged load indicating portions; however, it is within the broader aspects of this invention to provide more than three such projections. It is also within the broader scope of this invention to form the transition sections as a slight curve so long as the transition section does not extend axially beyond the plane of the bearing surface or bearing surface forming portion of the die.

Although the preferred embodiment of this invention has been shown and described, it should be understood that various modifications and rearrangements of the parts may be resorted to without departing from the scope of the invention as disclosed and claimed herein.

WHAT IS CLAIMED IS:

1. A fastener comprising a body formed with a thread, a circular flange concentric with said thread providing a recessed bearing portion extending along a first radial plane to boundary lines, and at least three axially extending load indicating portions peripherally spaced around said flange, characerized in that each load indicating portion (16, 17, 18) includes an inclined surface (22) bisected by a radius (20) and extending radially beyond said lines (23) from said bearing surface and forming a small angle with respect to said bearing surface (13), and a displaced surface (21) extending from each inclined surface substantially along a second radial plane spaced forward from said first plane, said bearing surface extending along its radial plane to the periphery of said flange (11) between each of said axially projecting portions, said load indicating portions being deformable under axial loading until they extend substantially along said first plane when said fastener is subjected to a predetermined load.

2. A fastener as set forth in claim 1, characterized in that said fastener includes a polygonal wrenching portion (10) providing flats intersecting at corners, said wrenching portion being sized so that it does not extend beyond said lines (23) by an amount materially affecting the stiffness of said flange (11) beyond said lines.

3. A fastener as set forth in claim 2, characterized in that said wrenching portion (10) does not extend radially beyond said lines.

4.  A fastener as set forth in claim 2, characterized in that the side of said flange (11) opposite said load indicating surfaces is a surface of revolution.

5.  A fastener as set forth in claim 2, characterized in that said fastener provides three load indicating portions (16, 17, 18), and said wrenching portion (10) is hexagonal and oriented with alternate of said flats extending parallel to associated of said lines (23).

6.  A fastener as set forth in claim 5, characterized in that said fastener is a nut (57) having a threaded bore.

7.  A fastener as set forth in claim 1, characterized in that said inclined surfaces (22) are planar and intersect said first plane at an angle no greater than about 16 degrees.

1'

8. A die for forming load indicating fasteners having a circular flange, comprising a body providing a circular flange forming face, characterized in that said face (42) provides a central portion of maximum axial extension substantially contained in a first radial plane and extending to boundary lines (43), and at least three peripherally spaced recessed portions each including an inclined surface (41) bisected by a radius extending beyond an associated of said lines (43) back from said central portion, and a peripheral portion (44) extending radially beyond each of said inclined surfaces substantially along a second radial plane spaced back from said first plane, said central portion extending along said first plane to the periphery of said die between said recessed portions, said die operating when a flange of a fastener blank is pressed thereagainst to form a fastener with a clamping face providing at least three peripherally spaced, axially extending, load indicating portions mating with the shape of said die.

9. A die as set forth in claim 8, characterized in that said inclined surfaces (41) are planar and intersect said first plane at an angle no greater than about 16 degrees.

10. A die as set forth in claim 8, characterized in that said fastener blank is a bolt blank and said die includes a central opening (46) therein providing an extrusion orifice operable to extrude the shank of said bolt blank as said flange moves to and is pressed against said die.

11.   A die as set forth in claim 8, characterized in that said fastener blank is a nut blank, and said die is provided with a central, generally cylindrical, axially extending projection (51) inwardly spaced from said lines (60), said projection being operable to form at least a portion of a passage in said nut blank.

12.   A method of producing dies for forging load indicating flanged fasteners comprising forming a blank having an axis of tool metal with a circular radial end face, and characterized by the steps of thereafter performing at least three cutting operations at peripherally spaced locations to form recessed face portions spaced from the axis of said blank and to provide each recessed portion with an inclined transition portion (41) bisected by a radius of said blank and extending back from said end face at a small angle, and a peripheral, substantially planar surface (44) substantially along a radial plane spaced back from the plane of said end face, said cuts being sized so that portions of said end face extend to the periphery of said blank between said recessed portions.

13.   A method of producing dies as set forth in claim 10, characterized in that said recessed face portions are sequentially cut with a cutter formed with a profile complementary to the shape of said recessed portion, and said blank and cutter are indexed relative to each other between each cut through an arc equal to 360 degrees divided by the number of recessed face portions.

14.   A method as set forth in claim 12, characterized in that said cutting operations are performed so that said inclined transition portions (41) are planar.

FIG.1

FIG.2

FIG.3

FIG.4

FIG.5

FIG.6

FIG.7

1/1

**European Patent Office**

**EUROPEAN SEARCH REPORT**

| | DOCUMENTS CONSIDERED TO BE RELEVANT | | EP 83111680.1 |
|---|---|---|---|
| Category | Citation of document with indication, where appropriate, of relevant passages | Relevant to claim | CLASSIFICATION OF THE APPLICATION (Int. Cl. ³) |
| D,A | US - A - 3 030 996 (FRIEDRICH DOERR) <br> * Claim 1 * <br> -- | 1 | F 16 B 31/02 |
| D,A | US - A - 4 293 256 (WALTER R. PAMER) <br> * Abstract; fig. 1,5,6 * <br> -- | 1 | |
| A | US - A - 4 149 446 (EMERSON D. SPENGLER et al.) <br> * Abstract * <br> -- | 1 | |
| A | US - A - 3 960 048 (DAVID PRUGH WAGNER) <br> * Abstract * <br> -- | 1 | TECHNICAL FIELDS SEARCHED (Int. Cl. ³) |
| A | US - A - 3 881 392 (GARY MARTIN CURTIS) <br> * Abstract; fig. 1-11; claim 1 * <br> ---- | 1 | F 16 B |

The present search report has been drawn up for all claims

| Place of search | Date of completion of the search | Examiner |
|---|---|---|
| VIENNA | 17-02-1984 | REIF |

EPO Form 1503. 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document